# EUROPEAN PATENT APPLICATION

(11) **EP 4 297 149 A1**
(43) Date of publication of application: **27.12.2023**
(21) Application number: 22180156.6
(22) Date of filing: 21.06.2022
(51) Int. Cl.: H01M 10/613, H01M 10/625, H01M 10/647, H01M 10/653, H01M 10/6551, H01M 10/6553, H01M 50/503, H01M 50/505, H01M 50/522, H01M 50/524, H01M 50/526

(54) **BUSBAR ASSEMBLY**

(71) Applicant: Newfrey LLC, New Britain, CT 06053 (US)
(72) Inventor: AKBARINIA, Alireza, 35394 Gießen (DE)
(74) Representative: SBD IPAdmin

(57) **Abstract**

Battery system (10) comprising at least one battery cell (12, 14) and a busbar assembly (16) and busbar assembly (16) for an electric vehicle having a busbar (18) for electric power distribution and a connector (20), wherein the busbar (18) comprises a body made of conducting material, the body being at least partially hollow, such that the busbar (18) comprises at least one conductive inner surface (22) and an air gap adapted to increase cooling efficiency by natural convection.

## Description

The present invention relates to a busbar assembly for electrical power distribution in an electric vehicle. The field of the invention is more particularly that of hybrid or electric vehicles in which the energy is stored in a storage battery.

A busbar is a metal strip or bar that conducts electricity and is used for electrical power distribution. Electrical distribution equipment, including switchboards, switchgears, and motor control centers, use busbar conductors to connect circuit breakers and other protection equipment to loads.

Car battery cells can be connected with busbars to make for instance battery modules and battery packs. A power supply for an electric vehicle such as a hybrid car or an electric car requires a large power output. The flow of electric current to and from the individual cells (i.e., a single electrochemical unit) is such that when several such cells are combined into successively larger assemblies (such as modules and packs), the current or voltage can be increased to generate the desired power output. In the present context, larger module and pack assemblies are made up of one or more cells joined in series (for increased voltage), parallel (for increased battery capacity) or both, and may include additional structure to ensure proper installation and operation of these cells. In this type of power supply device, the battery cells disposed adjacently to each other are electrically connected to each other by busbars each made of a conductive material.

In a known manner, in a power supply device where battery cells are electrically connected to each other via busbar assemblies, the busbar made of a conductive material is stacked via a connector on electrode terminals (or electrode lead) of the battery cells, and stacked portions of the busbar are welded to the electrode terminals of the battery cells. With such a configuration, the battery cells can be connected to each other with small electric resistance. However, the increase in the number of cells may additionally increase a risk of the battery overheating due to heat generated by a cell.

It is thus important for the busbars to have a structure which on the one hand ensures the rigidity required to withstand the electrodynamic stresses produced by the flow of current during normal conduction and on the other hand allows to optimize the heat flow.

Busbars assembly comprising busbars having different shapes are known from the prior art.

For instance document EP2324545A1 discloses a bus system for use in electrical distribution equipment. The bus system comprises a busbar comprising a pair of oppositely facing bowl-shaped conductors, forming an octagonal cross section in which air gaps are formed. The air gap increases cooling efficiency by natural convection by exposing more surface area of the conductors directly to the air flow.

EP1131868A1 discloses a busbar having a C-shaped cross-section. The C-shaped cross-section allows a modular geometry.

However, such arrangement does not allow to deal with the thermal management of the busbar without decreasing the performance of such busbars.

The present disclosure is designed to solve the problems mentioned above. Accordingly, the present invention provides, the present disclosure is directed to a busbar assembly for an electric vehicle according to claim 1. The busbar assembly has a busbar for electric power distribution and a connector. The busbar comprises a body made of conducting material, the body being at least partially hollow, such that the busbar comprises at least one inner conductive surface and an air gap adapted to increase cooling efficiency by natural convection. The connector is arranged on and/or connected to the inner conductive surface of the busbar and the outer surface of the busbar is electrically insulated.

Such designs allows to decrease the size of the busbar without decreasing the performance. On the contrary, the contact area being on the inner surface of the busbar body, the conductive surface is increased. Besides, the hollow configuration increases the heat transfer to the environment. The amount of material used in production is reduced, so as to achieve both an economic benefit and a lighter assembly. Finally, since the connections are inside the busbar; the busbar remains touch-safe on its outer surface and is adapted to keep an electrical insulation, even in the case of fire.

In an embodiment, the body extend longitudinally along a longitudinal axis X between a first end and a second end and has a body length L, wherein the body comprises a cavity extending longitudinally through the body from the first end to the second end. The cavity is thus through the body and the conductive surface is increased as well as the air gap for natural convection.

In an embodiment, the body is integral. The body is made of one part and no junction are formed.

In an embodiment, the cavity has a substantially circular or quadrangular or triangular transverse cross-section.

In an embodiment, the body comprises a lateral aperture connected to the cavity. The lateral aperture increases the natural air convection. Air can freely flow between the gaps and will not get trapped inside the cavity. The lateral aperture allows the natural air convection inside cavity.

In an embodiment, the lateral aperture extend longitudinally over a portion of the body length L. In another embodiment, the lateral aperture is formed by several holes. However, in other embodiments, the lateral aperture may have other shapes.

In an embodiment, the cavity is a first cavity and the body comprises a second cavity. This increases the connecting surfaces without increasing the length of the busbar body. Besides, two air gaps are thus arranged to increase the natural convection by exposing more surface area of the conductors directly to the air flow. The two air gaps for instance communicate with each other.

In an embodiment, the second cavity longitudinally extends through the body from the first end to the second end. The first and second cavity may each have an annular cross-section. For instance they can be concentrically arranged around the longitudinal axis.

In an embodiment, the body has a substantially circular or quadrangular or triangular transverse cross-section. These shapes allow to easily manufacture an integral body (a body in one part, without junction) with a cavity.

The present invention is also directed to a battery system comprising at least one battery cell and a busbar assembly according to any of the preceding claims, wherein the connector connects an electrode lead of the at least one battery cell to the busbar body.

The invention and its advantages will be better understood from the reading of the following description, given by way of example only and with reference to the accompanying drawings, of which:
Fig. 1 schematically shows a first and a second busbar assembly connecting a first and a second battery component;
Fig. 2A and Fig. 2B show a schematic perspective view and cross-section view of a busbar assembly according to a first embodiment of the invention;
Fig. 3A and Fig. 3B show a schematic perspective view and cross-section view of a busbar assembly according to a second embodiment of the invention;
Fig. 4A and Fig. 4B show a schematic perspective view and cross-section view of a busbar assembly according to a third embodiment of the invention;
Fig. 5A and Fig. 5B show a schematic perspective view and cross-section view of a busbar assembly according to a fourth embodiment of the invention;
Fig. 6A and Fig. 6B show a schematic perspective view and cross-section view of a busbar assembly according to a fifth embodiment of the invention;
Fig. 7 shows a schematic perspective view of a busbar assembly according to a sixth embodiment of the invention;
Fig. 8A, Fig. 8B and Fig. 8C show cross-section views of three different busbar assembly according to a seventh, eighth and ninth embodiment of the invention.

The embodiments of the disclosure will be best understood by reference to the drawings, wherein the same reference signs designate identical or similar elements. It will be readily understood that the components of the disclosed embodiments, as generally described and illustrated in the figures herein, could be arranged and designed in a wide variety of different configurations. Thus, the following detailed description of the embodiments of the systems and methods of the disclosure is not intended to limit the scope of the disclosure, as claimed, but is merely representative of possible embodiments of the disclosure.

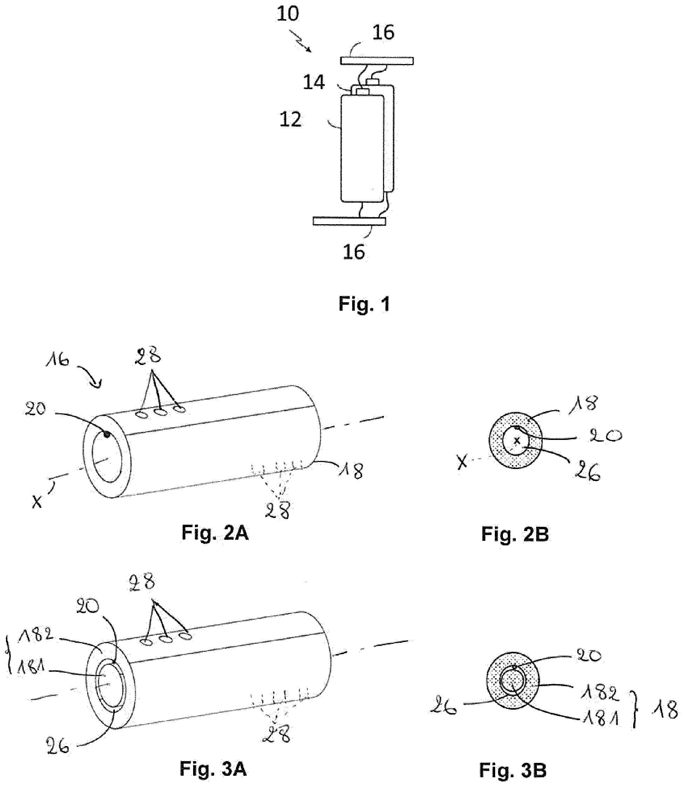

Fig. 1 illustrates a portion of an exemplary battery system 10. The battery system 10 comprises a first battery component 12 and a second battery component 14. As depicted, the battery components 12, 14 are connected in parallel. However, in other embodiments, several battery components may be provided, connected in parallel or in series or both. Busbar assemblies 16 are used to connect the battery components in this parallel arrangement. A first and a second busbar assembly 16 are depicted in Fig. 1. Each busbar assembly 16 is coupled to the battery components 12, 14. Battery components 12, 14 can be battery cells, battery modules, battery packs or any battery sub-assembly.

Fig. 2A to Fig. 8C show ten different embodiments of busbar assemblies 16 according to the invention. The busbar assembly 16 according to the invention comprises a busbar 18 for electric power distribution and a connector 20. The connector electrically connects the busbar 18 to a battery component 12, 14. The busbar 18 comprises a body made of conducting material. The body longitudinally extend along a longitudinal axis X and has a body length L. The body is at least partially hollow and comprises an inner surface 22 and an outer surface 24. The hollow part of the busbar body forms at least one air gap. The air gap allows to increase cooling efficiency of the busbar 18, and thus of the busbar assembly 16 by natural convection. The hollow part for instance is formed by a cavity 26. The inner surface 22 faces the cavity 26. The inner surface 22 delimits the cavity 26. The inner surface 22 is for instance not painted or coated and is therefore a conductive surface. The outer surface 24 may be painted or coated or treated or may be provided with an additional layer, to render this surface electrically insulated. A lateral aperture 28 is provided between the inner surface and the outer surface 22, 24. The lateral aperture 28 may have different shapes, as depicted below. The connector 20 is arranged at least partly on the inner surface 22 of the busbar body. This allows to provide a compact busbar assembly and a good electrical conductivity. The busbar body may be integral and continue. In other words, the busbar body may be formed by one unique part and does not comprise any cut or junction. The body is for instance a molded body or an extruded part.

The cavity 26 may have different shapes or cross sections, as notably visible in Fig. 2A to Fig. 9C. The busbar 18 may have different cross-section shapes, as visible in Fig. 2A to Fig. 9C.

For instance, in a first embodiment, depicted in Fig. 2A and Fig. 2B, the busbar 18 has a cylindrical form with a circular cross section. More particularly the busbar body has an annular cross section. The cavity 26 goes through the entire body length L (in another variant of the invention, said cavity could be a blind hole having a cavity length inferior to the body length). The lateral aperture 28 is formed by a plurality of holes arranged on the busbar body in the vicinity of a first and/or a second free end 30, 32. For instance, three holes are provided at one end, and three other holes are provided on the other end.

Fig. 3A and Fig. 3B show a second embodiment of a busbar assembly 16 with a busbar body having a circular cross-section. The cavity 26 has an annular cross-section such that the body comprises a core 181 and an outer sleeve 182, the cavity 26 extending between the core and the outer sleeve. The core 181 is for instance connected to the outer sleeve 182 at some connection points C1, C2 along the longitudinal axis X. The core 181 is cylindrical and the outer sleeve 182 has an annular cross-section. The core and the outer sleeve may be integral. For example, they form an extruded part.

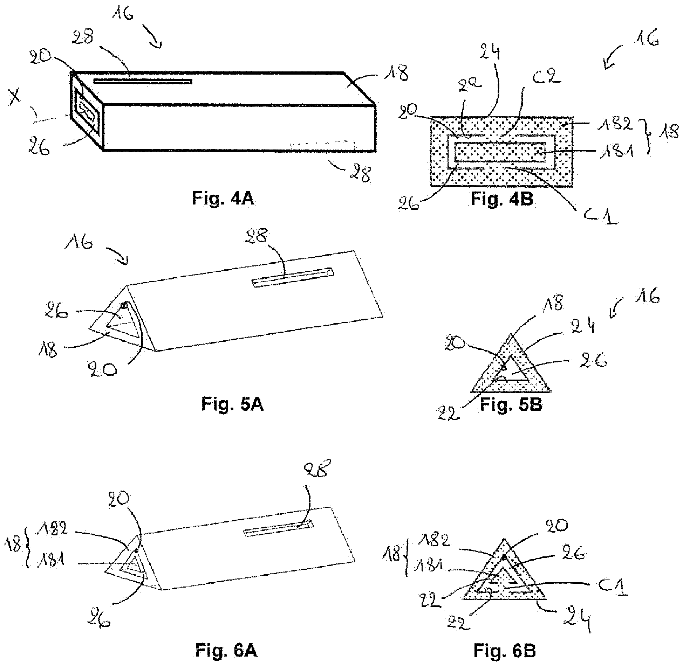

The third embodiment, illustrated in Fig. 4A and Fig. 4B, has a body with a core 181 and an outer sleeve 182. The core 181 and the outer sleeve 182 each have a rectangular cross section. The cavity 26 has also a rectangular cross-section. The cavity 26 extends between the outer sleeve 181 and the sleeve 182. The lateral aperture 28 is formed by a longitudinal slit arranged on the busbar body. The core 181 is for instance connected to the outer sleeve 182 at some connection points C1, C2 along the longitudinal axis. The core and the outer sleeve may be integral. For example, they form an extruded part.

In Fig. 5A, Fig. 5B, Fig. 6A and Fig. 6B, the cross-section of the body is triangular. The fourth embodiment in Fig. 5A and Fig. 5B shows a hollow body, wherein in the fifth embodiment, in Fig. 6A and Fig. 6B, the body comprises a core 181 and a sleeve 182. Both have a triangular cross-section and the cavity 26 extends therebetween. The lateral aperture 28 is formed by a longitudinal slit arranged on the busbar body. The lateral aperture 28 extends longitudinally only on a portion of the body length L. The core 181 is for instance connected to the outer sleeve 182 at some connection points C1, C2 along the longitudinal axis X. The core and the outer sleeve may be integral. For example, they form an extruded part (only one body).

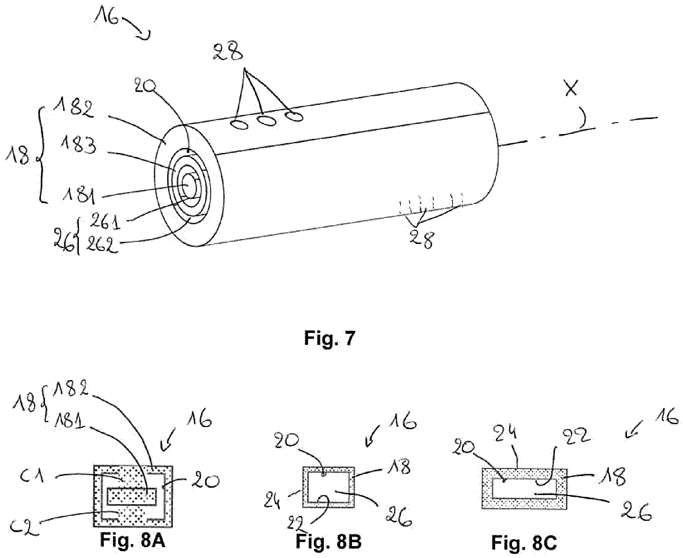

Fig. 7 shows a sixth embodiment, sensibly similar to the embodiment of Fig. 3A, but between the core 181 and the outer sleeve 182, the body also comprises an inner sleeve 183. Thus, the cavity 26 may be in two parts (or in other words, there might be two cavities 261, 262). A first part (or first cavity 261) extends between the core 181 and the inner sleeve 183, and the second part (or second cavity 262) extends between the inner sleeve 183 and the outer sleeve 182. The first part and the second part are each sensibly annular. The inner sleeve may be connected to the outer sleeve and to the core at some connection points.

Fig. 8A shows a cross-section view of a seventh embodiment, similar to the third embodiment of Fig. 4A and Fig. 4B, and wherein the body (and therefore the outer sleeve 182) has a square cross-section. As depicted, the core 181 has a rectangular cross-section, but in a variant the core 181 may also have a square cross-section. The eighth embodiment, disclosed in Fig. 8B comprises a hollow body with a square cross-section. The ninth embodiment comprises a hollow body with a rectangular cross-section.

In the second, third, fifth, sixth and seventh embodiment, the presence of a core 181 allows a further increases the electrically conductive surface and thus to increase the performance of the busbar assembly 16. However, such core 181 also increases the amount of material and therefore the weight. On the other side, a completely hollow body (as depicted in the first, fourth, eighth and ninth embodiments), allows to increase the air gap and improves the cooling efficiency by natural convection of the busbar assembly.

The busbar assemblies described above may be used in a battery system 10 as depicted in Fig. 1. The busbar 18 is connected via the connector 20 to at least a first battery component
battery system 10
first battery component 12
second battery component 14
busbar assembly 16
busbar 18
body length L
longitudinal axis X
connector 20
inner surface 22
outer surface 24
cavity 26
lateral aperture 28
a first and/or a second free end 30, 32
core 181
outer sleeve 182
inner sleeve 183
first cavity 261
second cavity 262
connection points C1, C2

## Claims

1. Busbar assembly (16) for an electric vehicle having a busbar (18) for electric power distribution and a connector (20), wherein the busbar (18) comprises a body made of conducting material, the body being at least partially hollow, such that the busbar (18) comprises at least one conductive inner surface (22) and an air gap adapted to increase cooling efficiency by natural convection,
**characterized in that**
the connector (20) is arranged on and/or connected to the inner surface (22) of the busbar (18) and the outer surface (24) of the busbar is electrically insulated.

2. Busbar assembly (16) according to claim 1, wherein the body extends longitudinally along a longitudinal axis (X) between a first end and a second end and has a body length L, wherein the body comprises a cavity (26) extending longitudinally through the body from the first end to the second end.

3. Busbar assembly (16) according to claim 2, wherein the cavity (26) has a substantially circular or quadrangular or triangular transverse cross-section.

4. Busbar assembly (16) according to claim 2 or claim 3, wherein the body comprises a lateral aperture (28) connected to the cavity (26).

5. Busbar assembly (16) according to any of claims 2 to 4, wherein the lateral aperture (28) extends longitudinally over a portion of the body length L.

6. Busbar assembly (16) according to any of claims 2 to 4, wherein the lateral aperture (28) is formed by several holes.

7. Busbar assembly (16) according to any of claims 2 to 6, wherein the cavity (26) is a first cavity (26), and the body comprises a second cavity (26).

8. Busbar assembly (16) according to claim 7, wherein the second cavity (26) longitudinally extends through the body from the first end (30) to the second end (32).

9. Busbar assembly (16) according to any of claims 1 to 8, wherein the body comprises a core (181) and a sleeve (182).

10. Busbar assembly (16) according to claim 9, wherein the sleeve is an outer sleeve (182), and wherein the body further comprises an inner sleeve (183).

11. Busbar assembly (16) according to any of claims 1 to 9, wherein the body is integral and continue.

12. Busbar assembly (16) according to any of claims 1 to 9, wherein the body has a substantially circular transverse cross-section.

13. Busbar assembly (16) according to any of claims 1 to 9, wherein the body has a substantially quadrangular transverse cross-section.

14. Busbar assembly (16) according to any of claims 1 to 9, wherein the body has a substantially triangular transverse cross-section.

15. Battery system (10) comprising at least one battery component (12, 14) and a busbar assembly (16) according to any of the preceding claims, wherein the connector (20) connects the battery component to the busbar (18).
